# EUROPÄISCHE PATENTSCHRIFT

(11) **EP 1 198 961 B1**
(45) Veröffentlichungstag und Bekanntmachung des Hinweises auf die Patenterteilung: **12.09.2007**
(21) Anmeldenummer: 00958136.4
(22) Anmeldetag: 14.07.2000
(51) Int. Cl.: H04Q 1/02, H04M 1/02

(54) **TELEKOMMUNIKATIONS-ANSCHLUSSEINHEIT FÜR DATEN- UND TELEKOMMUNIKATIONSANLAGEN**
TELECOMMUNICATION CONNECTION UNIT FOR DATA AND TELECOMMUNICATION SYSTEM
UNITE DE CONNEXION DE TELECOMMUNICATIONS POUR INSTALLATIONS DE DONNEES ET DE TELECOMMUNICATIONS

(30) Priorität: 15.07.1999 DE 19933270
(43) Veröffentlichungstag der Anmeldung: 24.04.2002
(73) Patentinhaber: CCS Technology, Inc., Wilmington, DE 19803 (US)
(72) Erfinder: BREUER, Mike, D-59065 Hamm (DE); BADURA, Stefan, D-58706 Menden (DE); ZIMMER, Rainer, D-58579 Schalksmühle (DE)
(74) Vertreter: Sturm, Christoph
(86) Internationale Anmeldenummer: PCT/DE2000/002315
(87) Internationale Veröffentlichungsnummer: WO 2001/006736

(56) Entgegenhaltungen:
- US-A- 5 572 348
- US-A- 5 841 836
- "MONOPOL ENDET AM WIDERSTAND" FUNKSCHAU,DE,FRANZIS-VERLAG K.G. MUNCHEN, Bd. 62, Nr. 21, 5. Oktober 1990 (1990-10-05), Seiten 123-124, XP000119640 ISSN: 0016-2841

## Beschreibung

Die Erfindung betrifft eine Telekommunikationseinheit.

Das nicht öffentliche Telekommunikationsnetz zum Beispiel der Deutschen Telekom endet bei einfachen Endstellen an Telefonanschlüssen mit einer Anschalteinrichtung NTA (Network Termination Analogic). Als Anschaltelement dient bei Neuinstallationen eine sechspolige, sogenannte TAE-Dose (TAE: Telekommunikations-Anschluß-Einheit), wobei zu einer Telekommunikationseinheit nach DIN 41715 eine sogenannte TAE-Dose und ein TAE-Stecker gehören. Diese sind mit bestimmten Codierungen, das heißt Steckerformen erhältlich. Für Telefone gilt die Codierung F (Fernsprechen), für Zusatzgeräte die Codierung N (Nicht Fernsprechen). Die TAE-Dosen sind je nach Bedarf mit entsprechenden Steckerkombinationen erhältlich. Eine TAE-Dose einer Anschalteinrichtung NTA enthält außerdem einen passiven Prüfabschluß (PPA), der aus einer Reihenschaltung einer Diode und einem Widerstand besteht. Die Diode ist in Sperrichtung geschaltet, so daß bei Normalbetrieb eine Schleifenbildung über sie nicht möglich ist. Nur bei Prüfvorgängen für Telekom und entsprechender Polung ist die Diode durchlässig. Mit Hilfe dieses passiven Prüfanschlusses kann die Telekomgesellschaft feststellen, ob eine gemeldete Störung im Telefonnetz oder in der Anlage des Telefonkunden liegt. Wird festgestellt, daß die Störung vor dem passiven Prüfabschluß PA vorliegt, ist die Telekomgesellschaft für die Reparatur verantwortlich. Liegt jedoch eine Störung irgendwo in der Anlage des Telefonkunden, also nach dem passiven Prüfanschluß, dann muß der Kunde selbst für die Reparatur sorgen. Ausschlaggebend dafür ist die Tatsache, daß die TAE-Dose der Telekomgesellschaft als offizieller Übergabepunkt zum Telefonkunden festgelegt ist.

Die US 5,841,836 offenbart eine Telekommunikationsanschlusseinheit mit in dieselben integrierten passiven elektronischen Bauelementen, mit Hilfe derer bestimmt werden kann, ob Leitungen eines Telekommunikationsnetzes benutzt sind oder nicht.

Hiervon ausgehend liegt der Erfindung das Problem zu Grunde, eine neuartige Telekommunikationseinheit zu schaffen.

Dieses Problem wird durch eine Telekommunikationseinheit nach Anspruch 1 gelöst. Hiernach weist die Telekommunikationseinheit eine einen Übergabepunkt zum nicht öffentlichen Telekommunikationsnetz bildende Telefon-Anschlusseinheit, die Anschlüsse für Adern bzw. Übertragungsleitungen des nicht öffentlichen Telekommunikationsnetzes umfasst, und eine Telekommunikations-Anschlusseinheit für Daten- und Telekommunikationsanlagen mit hohen Übertragungsraten, die zu Hochpass-, Tiefpass- oder Bandpassfiltern zusammengesetzte aktive und passive elektronische Bauelemente umfasst, auf, wobei die Telekommunikations-Anschlusseinheit mit der Telefon-Anschlusseinheit derart verschaltet ist, dass die aktiven und passiven elektronischen Bauelemente an die Übertragungsleitungen des nicht öffentlichen Telekommunikationsnetzes angeschlossen sind, wobei die Telekommunikations-Anschlusseinheit Anschlussbuchsen zum Anschließen kundenseitiger Geräte aufweist, wobei die Telefon-Anschlusseinheit in ein Anschlussgehäuse der Telekommunikations-Anschlusseinheit integriert ist, und wobei in dem Anschlussgehäuse der Telekommunikations-Anschlusseinheit weiterhin Überspannungs- und/oder Überstromschutzkomponenten sowie ein Anschluss für Messgeräte zur Netzwerkanalyse angeordnet sind.

Außerdem sind bei den erfindungsgemäßen Telekommunikations-Anschlußeinheiten gemäß der Erfindung Anschlüsse für Stromversorgung und für Meßgeräte zur Netzwerkanalyse vorgesehen, so daß eine servicefreundliche Überprüfung stattfinden kann. Durch die Erfindung wird nun an der Schnittstelle Telefongesellschaft/Telefonteilnehmer eine. Trennung der beiden Übertragungssignale von Sprach- und Datenkommunikation ermöglicht und somit eine störungssichere Übertragung von Daten und Sprache bei einer Datenübertragungsrate mit mehr als 144 kb/s gewährleistet. Die Übertragung von Sprache (analog und/oder digital) erfolgt hierbei gleichzeitig zur Datenübertragung. Dabei handelt es sich um eine Integration von POTS /ISDN-ADSL Splitterfiltern (POTS: Plain old system, ISDN: integrated service digital network, ADSL: asymmetrical digital subscriber line).

Die Erfindung wird nun anhand von sechs Figuren näher erläutert .
- Figur: 1 zeigt eine an sich bekannte Telekommunikations-Anschlußeinheit.
- Figur: 2 zeigt eine schematische Darstellung des passiven Prüfabschlusses in der an sich bekannten Telekommunikations-Anschlußeinheit.
- Figur: 3 zeigt eine Telekommunikations-Ahschlußeinheit gemäß der Erfindung mit symbolischer Darstellung der erfindungsgemäßen Bestückung mit elektronischen Bauelementen.
- Figur 4: zeigt eine Telekommunikations-Anschlußeinheit gemäß der Erfindung.
- Figur 5: zeigt eine Telekommunikations-Anschlußeinheit gemäß der Erfindung, bei der symbolhaft die elektronischen Bauelemente dargestellt sind und bei der der Teilnehmeranschluß mit Hilfe eines an sich bekannten Anschlußsteckers erfolgt.
- Figur 6: zeigt ein Ausführungsbeispiel der Telekommunikations-Anschlußeinheit nach Figur 5.

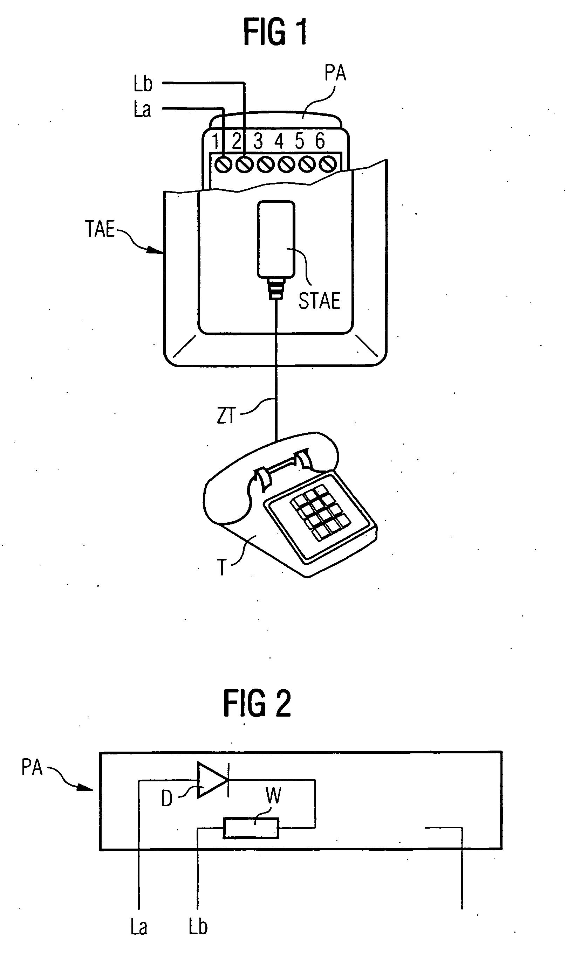

In Figur 1 ist eine an sich bekannte sechspolige Telekommunikations-Anschlußeinheit TAE als Stand der Technik gezeigt. Es sind mehrere Bauformen im Handel, bei denen eine schablonenhafte Codierung für Anschlußstecker vorgesehen ist, so daß bei Anschluß von Geräten in die jeweilige Steckerbuchse nur der korrespondierende Stecker eingeführt werden kann. Hier ist eine einfache Telekommunikations-Anschlußeinheit mit nur einem Anschlußstecker STAE für ein Telefon vorgesehen, wobei der Anschluß über eine Zuleitung ZT erfolgt. Im oberen aufgebrochenen Teil der Telekommunikations-Anschlußeinheit TAE sind die Anschlüsse für die ankommenden Adern La und Lb aufgezeigt, über denen ein passiver Prüfabschluß PA angeordnet ist. Dieser passive Prüfabschluß PA dient zur Überprüfung des nicht öffentlichen Telekommunikationsnetzes der jeweiligen Telekommgesellschaft.

Figur 2 verdeutlicht in einer schematischen Darstellung die Anordnung des passiven Prüfabschlusses PA, der aus einer Reihenschaltung einer Diode D und eines Widerstandes W besteht. Die Diode D ist in Sperrichtung geschaltet, so daß bei Normalbetrieb eine Schleifenbildung über sie nicht möglich ist. Nur bei Prüfvorgängen der Telekommgesellschaft mit der entsprechenden Polung ist die Diode D durchlässig geschaltet. Auf diese Weise kann festgestellt werden, ob ein Fehler auf dem nicht öffentlichen Telekommunikationsnetz oder in der Anlage des Telefonkundens liegt.

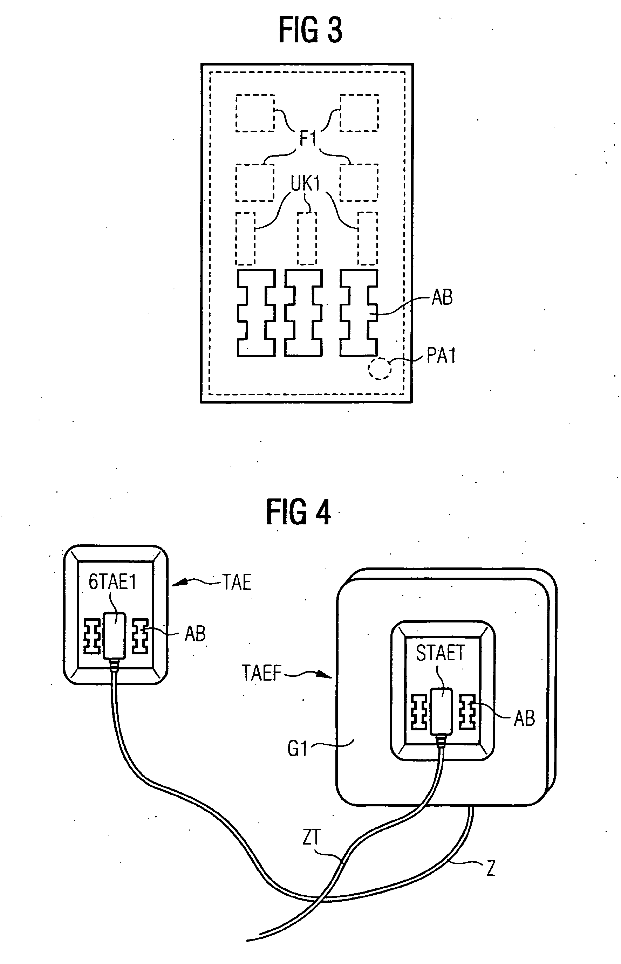

Figur 3 zeigt in einer skizzenhaften Darstellung den Aufbau einer Telekommunikations-Anschlußeinheit TAEF gemäß der Erfindung, bei der an den Änschlußleitungen des Telekommunikationsnetzes aktive und/oder passive elektronische Bauelemente in der Zusammenschaltung zu Hochpaß-, Tiefpaß- oder Bandpaßfiltern F1 zusammengeschaltet sind. Weiterhin ist angedeutet, daß sich an den Leitungseingängen auch überspannungs- bzw. Überstromschutzkomponenten UK1 befinden, die einen Schutz gegen Überspannungen bzw. Überströme gewährleisten. Außerdem ist ein Prüfanschluß PA1 vorgesehen, an dem Meßgeräte zur Überprüfung des kundeneigenen Netzes angeschaltet werden können. Schließlich ist eine schablonenhafte Codierung der Anschlußbuchsen AB aufgezeigt, wobei hier drei gleichartige Buchsen vorgesehen sind.

Figur 4 zeigt nun ein Ausführungsbeispiel einer Telekommunikations-Anschlußeinheit TAEF gemäß der Erfindung, bei dem die Anschlußeinheit mit den codierten Anschlußbuchsen um die technischen Neuerungen gemäß der Erfindung erweitert ist. In dem erweiterten Gehäuse sind die aktiven/passiven Bauelemente für die Hochpaß-, Tiefpaß- oder Bandpaßfilter, die Überspannungs- und/oder Überstromschutzkomponenten sowie Anschlußmöglicheiten für die Meßgeräte zur Netzwerkanalyse angeordnet. Der Anschluß an das nicht öffentliche Telekommunikationsnetz erfolgt bei diesem Ausführungsbeispiel über eine bisher übliche Telekommunikations-Anschlußeinheit TAE über einen an sich bekannten Stecker STAE1 mit entsprechender Zuleitung Z, die in der erfindungsgemäßen TelekommunikationsEinheit TAEF eingeführt wird. Über die ebenfalls gleich codierten Buchsenausgänge AB erfolgt dann wiederum mit einem Stecker STAET und einer Zuleitung ZT der Anschluß der kundeneigenen Geräte.

Es kann jedoch auch die erfindungsgemäße Telekommunikations-Anschlußeinheit TAEF direkt als offizieller Übergangspunkt an das nicht öffentliche Telekommunikationsnetz angeschlossen werden, so daß die bisherige Telekommunikations-Anschlußeinheit TAE entfallen kann.

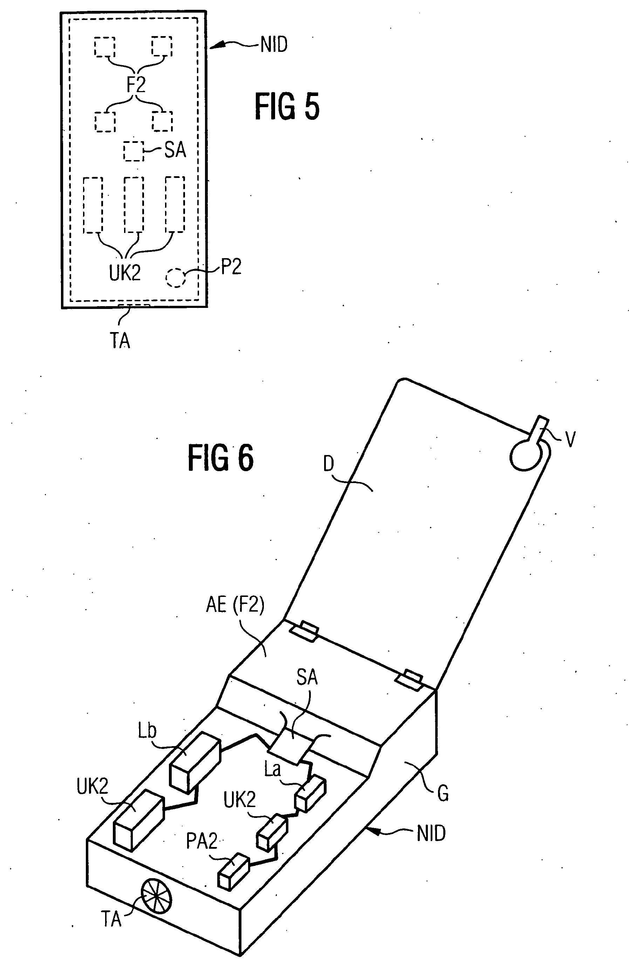

In Figur 5 ist nun schematisch eine neue TelekommunikationsEinheit als sogenanntes Network Interface Device NID dargestellt. Bei dieser Telekommunikations-Anschlußeinheit gemäß der Erfindung erfolgt der Anschluß der kundeneigenen Geräte über einen Steckanschluß SA, wobei das Anschlußkabel über einen Teilnehmeranschluß TA aus dem Gehäuse ausgeführt wird. In gleicher Weise wie bei dem vorhergehenden Ausführungsbeispiel sind auch hier an den Eingangsleitungen des nicht öffentlichen Telekommunikationsnetzes entsprechende passive und/oder aktive Bauelemente in Form von Hochpaß-, Tiefpaß- oder Bandpaßfiltern zusammengeschaltet, um, wie eingangs bereits erläutert wurde, die Telekommunikations-Anschlußeinheit - in diesem Fall das Network Interface Device NID - für den Anschluß mit hoher Übertragungsrate auszustatten. Wiederum sind auch Überspannungs- oder Überstromkomponenten UK2 an den Eingangsleitungen angeordnet und ein Anschluß P2 für Netzgeräte ist ebenfalls vorgesehen.

Figur 6 zeigt schließlich ein sogenanntes Network Interface Device NID, das aus einem schlagfesten Gehäuse G mit Deckel D besteht, das mit Hilfe eines Verschlusses geschlossen werden kann. In der eigentlichen Anschlußeinheit AE erfolgt die Zuführung der Leitungsadern des Telekommunikationsnetzes, wobei hier auch die entsprechenden aktiven und/oder passiven Bauelemente der Hochpaß-, Tiefpaß- oder Bandpaßfilter F2 angeordnet sind. Diese Anschlußeinheit AE ist zugriffsicher verschlossen. An den ausgeführten Leitungsadern La bzw. Lb des Telekommunikationsnetzes sind hier über entsprechende Stekkereinheiten die Überspannungs- oder Überstromkomponenten UK2 angeordnet. Außerdem befindet sich hier ein Prüfanschluß PA2 für den Anschluß von Meßgeräten zur Überprüfung des kundeneigenen Netzwerkes. In der Mitte des Gehäuses G befindet sich eine Teilnehmerausführung TA, durch die das Anschlußkabel für die kundeneigenen Geräte ausgeführt wird. Die Anschaltung dieser Zuleitung erfolgt über einen speziellen Steckeranschluß SA, in den ein entsprechender Anschlußstecker eingeführt wird. In an sich bekannter Weise eigenen sich hierfür' besonders modifizierte Stecker, die unter der Bezeichnung RJ-11 Stecker bekannt sind.

## Patentansprüche

1. Telekommunikationseinheit (TAE, TAEF), mit einer einen Übergabepunkt zum nicht öffentlichen Telekommunikationsnetz bildenden Telefon-Anschlusseinheit (TAE), die Anschlüsse für Adern bzw. Übertragungsleitungen (La, Lb) des nicht öffentlichen Telekommunikationsnetzes umfasst, und mit einer Telekommunikations-Anschlusseinheit (TAEF) für Daten- und Telekommunikationsanlagen mit hohen Übertragungsraten, die zu Hochpass-, Tiefpass- oder Bandpassfiltern (F1) zusammengesetzte aktive und passive elektronische Bauelemente umfasst, wobei die Telekommunikations-Anschlusseinheit (TAEF) mit der Telefon-Anschlusseinheit (TAE) derart verschaltet ist, dass die aktiven und passiven elektronischen Bauelemente an die Übertragungsleitungen (La, Lb) des nicht öffentlichen Telekommunikationsnetzes angeschlossen sind, wobei die Telekommunikations-Anschlusseinheit (TAEF) Anschlussbuchsen (AB) zum Anschließen kundenseitiger Geräte aufweist, wobei die Telefon-Anschlusseinheit (TAE) in ein Anschlussgehäuse (G1) der Telekommunikations-Anschlusseinheit (TAEF) integriert ist, und wobei in dem Anschlussgehäuse (G1) der Telekommunikations-Anschlusseinheit (TAEF) weiterhin Überspannungs- und/oder Überstromschutzkomponenten (UK1) sowie ein Anschluss (PA1) für Messgeräte zur Netzwerkanalyse angeordnet sind.

2. Telekommunikationseinheit nach Anspruch 1, **dadurch gekennzeichnet, dass** als passive elektronische Bauelemente Widerstände, Kondensatoren, Spulen angeschlossen sind.

3. Telekommunikationseinheit nach Anspruch 1 oder 2, **dadurch gekennzeichnet, dass** als aktive elektronische Bauelemente Halbleiter-Bauelemente angeschlossen sind.

## Claims

1. Telecommunications unit (TAE, TAEF) with a telephone connection unit (TAE) forming a transfer point to the non-public telecommunications network, comprising connections for wires or transmission lines (La, Lb) of the non-public telecommunications network, and with a telecommunications connection unit (TAEF) for data systems and telecommunications systems with high transmission rates, comprising active and passive electronic components combined to form high-pass, lowpass or bandpass filters (Fl), whereby the telecommunications connection unit (TAEF) is connected to the telephone connection unit (TAE) in such a way that the active and passive electronic components are connected to the transmission lines (La, Lb) of the non-public telecommunications network, whereby the telecommunications connection unit (TAEF) has connection sockets (AB) for the connection of equipment at the customer end, whereby the telephone connection unit (TAE) is integrated into a connection housing (G1) of the telecommunications connection unit (TAEF), and whereby overvoltage and/or overcurrent protection components (UK1) and a connection (PA1) for measuring equipment for network analysis are furthermore disposed in the connection housing (G1) of the telecommunications connection unit (TAEF).

2. Telecommunications unit according to Claim 1, **characterized in that** resistors, capacitors and coils are connected as passive electronic components.

3. Telecommunications unit according to Claim 1 or 2, **characterized in that** semiconductor components are connected as active electronic components.

## Revendications

1. Unité de télécommunication (TAE, TAEF) qui présente une unité de raccordement téléphonique (TAE) qui forme un point de transfert vers un réseau de télécommunication privé, qui comprend des raccordements pour des fils ou des conducteurs de transfert (La, Lb) du réseau de télécommunication privé, ainsi qu'une unité de raccordement de télécommunication (TAEF) pour des installations de données et de télécommunication à haut débit qui comprend des composants électroniques actifs et des composants électroniques passifs qui forment des filtres passe-haut, des filtres passe-bas ou des filtres passe-bande (F1), l'unité (TAEF) de raccordement de télécommunication étant raccordée à l'unité (TAE) de raccordement téléphonique de telle sorte que les composants électroniques actifs et les composants électroniques passifs soient raccordés aux conducteurs de transfert (La, Lb) du réseau de télécommunication privé, l'unité (TAEF) de raccordement de télécommunication présentant des douilles de raccordement (AB) qui permettent de raccorder des appareils du client, l'unité (TAE) de raccordement téléphonique étant intégrée dans un boîtier de raccordement (G1) de l'unité (TAEF) de raccordement de télécommunication et des composants (UK1) de protection contre les surtensions et/ou contre les surcourants ainsi qu'un raccordement (PA1) pour des appareils de mesure permettant l'analyse du réseau étant disposés dans le boîtier de raccordement (G1) de l'unité (TAEF) de raccordement de télécommunication.

2. Unité de télécommunication selon la revendication 1, **caractérisée en ce que** les composants électroniques passifs raccordés sont des résistances, des condensateurs ou des bobines.

3. Unité de télécommunication selon les revendications 1 ou 2, **caractérisée en ce que** les composants électroniques actifs raccordés sont des composants à semi-conducteurs.
